# EUROPÄISCHE PATENTSCHRIFT

(11) **EP 0 821 864 B1**
(45) Veröffentlichungstag und Bekanntmachung des Hinweises auf die Patenterteilung: **02.06.1999**
(21) Anmeldenummer: 96904752.1
(22) Anmeldetag: 08.03.1996
(51) Int. Cl.: H05B 41/29

(54) **VORRICHTUNG UND VERFAHREN ZUM BETREIBEN EINER GASENTLADUNGSLAMPE**
DEVICE AND PROCESS FOR OPERATING A GAS DISCHARGE LAMP
DISPOSITIF ET PROCEDE DESTINES A FAIRE FONCTIONNER UNE LAMPE A DECHARGE

(30) Priorität: 18.04.1995 DE 19513557
(43) Veröffentlichungstag der Anmeldung: 04.02.1998
(73) Patentinhaber: ROBERT BOSCH GMBH, 70442 Stuttgart (DE)
(72) Erfinder: SEILER, Hartmut, D-72760 Reutlingen, (DE)
(86) Internationale Anmeldenummer: DE9600421
(87) Internationale Veröffentlichungsnummer: WO9633596

(56) Entgegenhaltungen:
- EP-A- 0 279 489
- EP-A- 0 408 121
- DE-A- 3 608 362
- GB-A- 2 204 751
- US-A- 5 144 204

## Beschreibung

### Stand der Technik

Die Erfindung geht aus von einer Vorrichtung und einem Verfahren zum Betreiben einer Gasentladungslampe nach der Gattung der unabhängigen Ansprüche.

Aus der DE-A 37 15 162 ist eine Schaltungsanordnung zum Betreiben einer Gasentladungslampe bekannt, die eine Wechselspannung geeigneter Höhe und Frequenz zum Betreiben der Gasentladungslampe bereitstellt. Die Gasentladungslampe ist in einem Resonanzkreis enthalten, der zum Zünden der Gasentladungslampe mit der Resonanzfrequenz angeregt wird. Nach der Lampenzündung reduziert die vorbekannte Schaltungsanordnung die Frequenz der Wechselspannung gegenüber der Resonanzfrequenz auf niedrigere Werte zum Betreiben der Gasentladungslampe im Dauerbetrieb.

Aus der EP-A 279 489 ist ein DC/AC-Konverter zum Betreiben einer Gasentladungslampe bekannt. Die Gasentladungslampe ist in einem Resonanzkreis enthalten, der die Diagonale einer Halbbrückenschaltung bildet. Vorhanden ist eine an einer Spannungsquelle angeschlossene Reihenschaltung mit einem ersten sowie mit einem zweiten Halbleiterschalter, wobei der Resonanzkreis an einem Verbindungspunkt zwischen den beiden Halbleiterschaltern angeschlossen ist.

Aus der DE-A 36 08 362 ist ein Vorschaltgerät für Niederdruck-Gasentladungslampen bekannt, wobei die Niederdruck-Gasentladungslampe in der Diagonale einer Vollbrückenschaltung angeordnet ist. Die Brückenschaltung umfaßt jeweils zwei in Reihe geschaltete Halbleiterschalter, wobei die Reihenschaltungen jeweils ein induktives Element enthalten.

Der Erfindung liegt die Aufgabe zugrunde, eine Schaltung sowie ein Verfahren zum Betreiben einer Gasentladungslampe anzugegeben, die mit einfachen Mitteln ein zuverlässiges Zünden und Betreiben der Gasentladungslampe im Dauerbetrieb ermöglichen.

Die Aufgaben werden durch die in den unabhängigen Ansprüchen angegebenen Merkmale jeweils gelöst.

### Vorteile der Erfindung

Die erfindungsgemäße Schaltungsanordnung weist den Vorteil auf, daß mit einfachen schaltungstechnischen Mitteln eine zum Zünden einer Gasentladungslampe, insbesondere einer Hochdruck-Gasentladungslampe, ausreichend hohe Zündspannung und im anschließenden Betrieb der Gasentladungslampe eine Betriebsspannung mit einem hohen Wirkungsgrad zur Verfügung gestellt werden.

Erfindungsgemäß ist vorgesehen, daß die Gasentladungslampe in einem Resonanzkreis enthalten ist. Weiterhin ist eine Reihenschaltung vorgesehen, die einen ersten Halbleiterschalter, ein erstes induktives Element sowie einen zweiten Halbleiterschalter enthält, wobei der Resonanzkreis an der Verbindung von dem ersten induktiven Element mit dem zweiten Halbleiterschalter angeschlossen ist.

Das erfindungsgemäße Verfahren, das bevorzugt auf die beschriebene Struktur angewendet wird, sieht vor, daß vor der Lampenzündung der erste Halbleiterschalter ständig eingeschaltet und der zweite Halbleiterschalter wenigstens näherungsweise mit der Resonanzfrequenz des die Gasentladungslampe enthaltenden Resonanzkreises geschaltet wird, um den Resonanzkreis anzuregen. Nach der Zündung der Gasentladungslampe kommt, abhängig von der Betriebsfrequenz, nur noch dem ersten induktiven Element des Resonanzkreises eine Bedeutung zu und die beiden Halbleiterschalter werden abwechselnd geschaltet mit einer Betriebsfrequenz zum Betreiben der Gasentladungslampe im Dauerbetrieb.

Vorteilhafte Weiterbildungen und Ausgestaltungen der erfindungsgemäßen Vorrichtung und des Verfahrens ergeben sich aus abhängigen Ansprüchen.

Eine vorteilhafte Ausgestaltung betrifft den Resonanzkreis, der als Reihenschaltung von einem zweiten induktiven Element mit einem Kondensator ausgestaltet ist, der parallel zur Gasentladungslampe geschaltet ist. Die erfindungsgemäß vorgesehene Resonanzkreisausgestaltung weist den Vorteil auf, daß nach der Zündung der Gasentladungslampe der parallel zur Gasentladungslampe geschaltete Kondensator wirkungslos ist.

Eine vorteilhafte Weiterbildung des Resonanzkreises sieht vor, daß der Resonanzkreis über einen weiteren Kondensator beispielsweise mit Schaltungsmasse verbunden ist. Der weitere Kondensator führt zu einer Abtrennung von Gleichspannungsanteilen an der Gasentladungslampe. Die Energieversorgung der erfindungsgemäßen Schaltungsanordnung kann mit dieser Maßnahme mit einer Spannungsquelle vorgenommen werden, die lediglich eine Ausgangsspannung bereitstellt.

Eine vorteilhafte Weiterbildung sieht den Einsatz eines Zünddetektors vor, der das Zünden der Gasentladungslampe feststellt und in einer Ansteuerschaltung der Halbleiterschalter Umschaltvorgänge auslöst. Der Einsatz des Zünddetektors, der vorzugsweise die an der Gasentladungslampe auftretende Spannung auswertet, ermöglicht einen raschen Übergang von der Zündphase der Gasentladungslampe zum anschließenden Dauerbetrieb. Das rasche Erkennen der Zündung der Gasentladungslampe stellt eine Energiezufuhr in die Gasentladungslampe sicher und verhindert somit ein Erlöschen des Lichtbogens nach dem Zündvorgang.

Weitere vorteilhafte Maßnahmen betreffen die Ansteuerung des zweiten Halbleiterschalters während des Zündvorgangs. Ein erfindungsgemäß vorgesehener Zündtaktgenerator, der den zweiten Halbleiterschalter mit der Resonanzfreuquenz des Resonanzkreises schaltet, enthält vorzugsweise einen Frequenzmodulator, der ein Variieren der vom Zündtaktgenerator bereitgestellten Taktfrequenz ermöglicht, um eine möglichst gute Übereinstimmung mit der Resonanzfrequenz des Resonanzkreises zu erzielen.

Eine vorteilhafte Maßnahme sieht vor, daß der Zündtaktgenerator synchronisiert ist mit dem im Resonanzkreis fließenden Strom. Insbesondere ist es dann möglich, den Zündtaktgenerator mit dem Stromnulldurchgang im Resonanzkreis zu synchronisieren.

Eine andere vorteilhafte Ausgestaltung sieht den Einsatz eines Zündpakettaktgenerators vor, der die Anregung des Resonanzkreises mittels Impulspaketen veranlaßt. Die zeitweise Unterbrechung des Zündvorgangs bei einem erfolglosen Zündversuch reduziert die Belastung der im Resonanzkreis enthaltenen Bauelemente, insbesondere des Kondensators, der parallel zur Gasentladungslampe geschaltet ist. Eine Weiterbildung sieht vor, daß die Anzahl der Zündpakete von einem Zähler erfaßt wird, der nach jedem Erhöhen des Zählerstands die Frequenz des Zündtaktgenerators absenkt oder erhöht. Vorzugsweise erfolgt die Absenkung oder Erhöhung in Abhängigkeit von der an der Gasentladungslampe auftretenden Spannung. Mit dieser Maßnahme wird das Erreichen der Resonanzfrequenz sichergestellt und eine zuverlässige Zündung der Gasentladungslampe ermöglicht.

Eine vorteilhafte Weiterbildung sieht vor, daß die Gleichspannungsquelle, mit der die Reihenschaltung, welche die beiden Halbleiterschalter enthält, verbunden ist, als DC/DC-Wandler ausgebildet ist, der die von vorzugsweise einer Batterie bereitgestellte Betriebsspannung auf ein Maß erhöht, das zum Betreiben der Gasentladungslampe im Dauerbetrieb ausreicht. Eine Variation der Spannung eröffnet eine einfache Möglichkeit zur Leistungssteuerung der Gasentladungslampe.

Die erfindungsgemäße Vorrichtung sowie das erfindungsgemäße Verfahren eignen sich insbesondere zum Betreiben von Gasentladungslampen, vorzugsweise Hochdruck-Gasentladungslampen, die als Scheinwerferlampen in einem Kraftfahrzeug angeordnet sind. Der Einsatz von Gasentladungslampen als Scheinwerferlampen im Kraftfahrzeug führt zu einer Belastung der Energieversorgungsschaltung durch hohe Umgebungstemperaturen. Um die Eigenerwärmung gering zu halten, muß die erfindungsgemäße Schaltungsanordnung daher einen hohen Wirkungsgrad aufweisen. Weiterhin muß eine hohe Betriebssicherheit bei rauhen Umgebungsbedingungen ohne Wartung gewährleistet sein.

Weitere vorteilhafte Weiterbildungen und Ausgestaltungen der erfindungsgemäßen Vorrichtung und des Verfahrens ergeben sich aus weiteren abhängigen Ansprüchen und aus der folgenden Beschreibung.

### Zeichnung

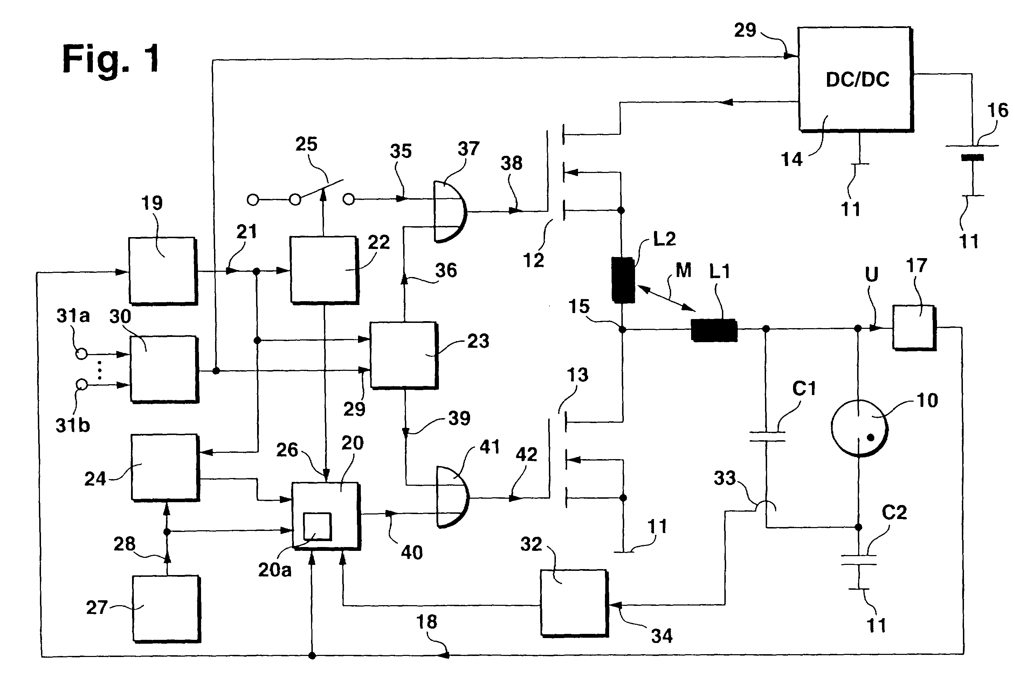

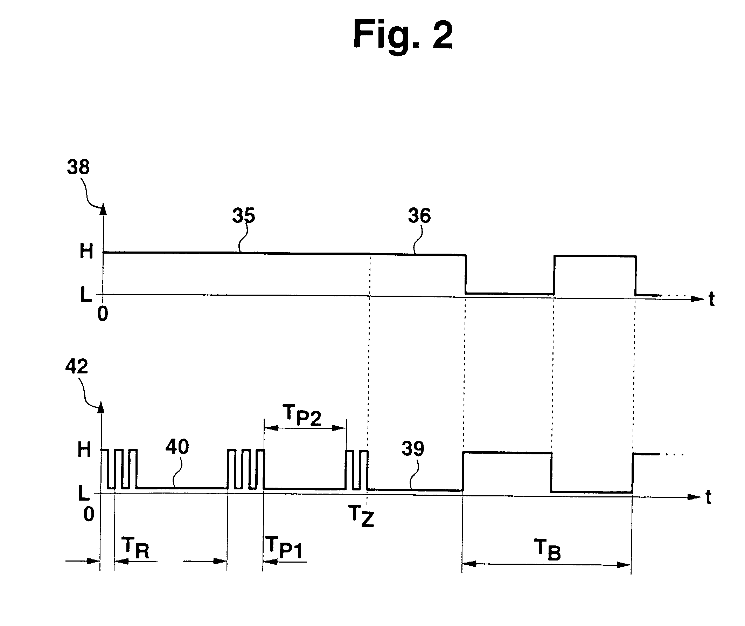

Figur 1 zeigt ein Schaltbild einer erfindungsgemäßen Vorrichtung zum Betreiben einer Gasentladungslampe und Figur 2 zeigt in zwei Teilbildern Signalverläufe in Abhängigkeit von der Zeit, die in der erfindungsgemäßen Vorrichtung auftreten.

Figur 1 zeigt eine Gasentladungslampe 10, die in einem Resonanzkreis enthalten ist. Den Resonanzkreis bilden ein erstes induktives Element L1, im folgenden als erste Spule L1 bezeichnet, sowie ein zur Gasentladungslampe 10 parallel geschalteter erster Kondensator C1. Die Gasentladungslampe 10 ist über einen zweiten Kondensator C2 mit einer Schaltungsmasse 11, im folgenden als Masse 11 bezeichnet, und über die erste Spule L1 mit einer Reihenschaltung verbunden. Die Reihenschaltung enthält einen ersten Halbleiterschalter 12, ein zweites induktives Element L2, im folgenden als zweite Spule L2 bezeichnet, sowie einen zweiten Halbleiterschalter 13. Die zweite Spule L2 ist über die als Pfeil eingetragene Kopplung M mit der ersten Spule L1 magnetisch gekoppelt. Der erste Halbleiterschalter 12 ist einerseits mit einer Spannungsquelle 14 und andererseits mit der zweiten Spule L2 verbunden. An einer Verbindung 15 von der zweiten Spule L2 mit dem zweiten Halbleiterschalter 13, der an Masse 11 angeschlossen ist, liegt die erste Spule L1 des Resonanzkreises. Die Spannungsquelle 14, die an Masse 11 angeschlossen ist, bezieht eine Energie aus einer Batterie 16.

Eine an der Gasentladungslampe 10 auftretende Spannung U erfaßt ein Spannungssensor 17, der ein Spannungssignal 18 an einen Zünddetektor 19 und an einen Zündtaktgenerator 20 abgibt.

Der Zünddetektor 19 gibt ein Umschaltsignal 21 an einen Umschalter 22, einen Betriebstaktgenerator 23 sowie an einen Zähler 24 ab. Der Umschalter 22 betätigt einen Schalter 25 und gibt ein Schaltsignal 26 an den Zündtaktgenerator 20, der einen Frequenzmodulator 20a enthält, ab. Weiterhin erhält der Zündtaktgenerator 20 ein von einem Zündpakettaktgenerator 27 bereitgestelltes Ausgangssignal 28 zugeleitet, das gleichermaßen dem Zähler 24 zugeführt ist.

Der Betriebstaktgenerator 23 wird außer von dem Umschaltsignal 21 von einem Steuersignal 29 beeinflußt, das eine Leistungsvorgabe 30 in Abhängigkeit von mehreren Eingangssignalen 31a ... 31b erzeugt. Das Steuersignal wird gleichermaßen der Spannungsquelle 14 zugeführt.

Ein weiteres Eingangssignal des Zündtaktgenerators 20 stellt ein Stromnulldurchgangsdetektor 32 bereit, der ein von einem Stromsensor 33 erfaßtes, im Resonanzkreis L1, C1 auftretendes Stromsignal 34 erfaßt.

Der Schalter 25 stellt ein erstes Teilansteuersignal 35 und der Betriebstaktgenerator 23 ein zweites Teilansteuersignal 36 für den ersten Halbleiterschalter 12 bereit. Die beiden Teilansteuersignale 35, 36 durchlaufen eine erste ODER-Verknüpfung 37, welche ein erstes Ansteuersignal 38 an den ersten Halbleiterschalter 12 abgibt.

Der Betriebstaktgenerator 23 stellt weiterhin ein erstes Teilansteuersignal 39 und der Zündtaktgenerator 20 ein zweites Teilansteuersignal 40 für den zweiten Halbleiterschalter 13 bereit. Eine zweite ODER-Verknüpfung 41 bildet aus den beiden Teilansteuersignalen 39, 40 für den zweiten Halbleiterschalter 13 ein zweites Ansteuersignal 42 für den zweiten Halbleiterschalter 13.

Die Funktionsweise der erfindungsgemäßen Vorrichtung sowie des erfindungsgemäßen Verfahrens werden anhand des in Figur 1 gezeigten Schaltbilds und anhand der in Figur 2 gezeigten Signalverläufe in Abhängigkeit von der Zeit t näher erläutert:

Nach der Inbetriebnahme der erfindungsgemäßen Vorrichtung ist die Gasentladungslampe 10 im ausgeschalteten Zustand. Eine Zündung der Gasentladungslampe 10 wird im wesentlichen durch die Spannungsüberhöhung an der Gasentladungslampe 10 erreicht, die mit dem Resonanzkreis L1, C1 erhalten wird, der die erste Spule L1 sowie den ersten Kondensator C1 enthält. Der Zünddetektor 19 stellt fest, daß die Gasentladungslampe 10 im ausgeschalteten Zustand ist. Eine Überprüfung ist beispielsweise durch Überwachung der Spannung U an der Gasentladungslampe 10 möglich, welche der Spannungssensor 17 erfaßt, der beispielsweise als ohmscher Spannungsteiler realisiert ist. Gesteuert vom Umschaltsignal 21, das der Zünddetektor 19 abgibt, veranlaßt der Umschalter 22 ein Schließen des Schalters 25 sowie eine Inbetriebnahme des Zündtaktgenerators 20 über das Schaltsignal 26.

Der Schalter 25, der das erste Teilansteuersignal 35 bereitstellt, ist mit einer Gleichspannungsquelle verbunden, so daß das erste Teilansteuersignal 35 ein Signal ist, welches den ersten Halbleiterschalter 12 ständig eingeschaltet hält.

In Figur 2 sind die beiden Ansteuersignale 38, 42 der beiden Halbleiterschalter 12, 13 in Abhängigkeit von der Zeit t gezeigt. Das obere Teilbild von Figur 2 zeigt das erste Ansteuersignal 38, und das zweite untere Teilbild von Figur 2 zeigt das zweite Ansteuersignal 42. Nach der Inbetriebnahme der Schaltung zum Zeitpunkt 0 weist das erste Ansteuersignal 38 einen H-Pegel auf, der einem Einschaltpegel des ersten Halbleiterschalters 12 entspricht. Das erste Teilansteuersignal 35 tritt auf zwischen dem Zeitpunkt 0 und einem Zeitpunkt T_{Z}, wobei angenommen ist, daß zum Zeitpunkt T_{Z} die Gasentladungslampe 10 zündet.

Bis zum Zündzeitpunkt T_{Z} stellt der Zündtaktgenerator 20 das zweite Teilansteuersignal 40 bereit. Das zweite Teilansteuersignal 40 enthält Signalanteile mit der Zündtaktperiodendauer T_{R}, die der Periodendauer der Resonanzfrequenz des Resonanzkreises L1, C1 zumindest näherungsweise entsprechen sollte. Das von der zweiten ODER-Verknüpfung 41 weitergeleitete zweite Teilansteuersignal 40 schaltet den zweiten Halbleiterschalter 13 innerhalb der Zündtaktperiodendauer T_{R} ein und aus. Das Verhältnis von Einschaltzeitdauer zu Ausschaltzeitdauer hängt von der von der Spannungsquelle 14 zur Verfügung gestellten Spannung, von der Induktivität der zweiten Spule L2 sowie inbesondere von den Werten der Bauelemente des Resonanzkreises L1, C1 ab. In einem realisierten Ausführungsbeispiel wurde die Einschaltzeit auf drei Viertel und die Ausschaltzeit auf ein Viertel der Zündtaktperiodendauer T_{R} festgelegt.

Während der Einschaltdauer des zweiten Halbleiterschalters 13 steigt der durch die zweite Spule L2 zur Masse 11 fließende Strom an. Nach dem Abschalten des zweiten Halbleiterschalters 13 kommutiert der durch die zweite Spule L2 fließende Strom, der nun nicht mehr durch den zweiten Halbleiterschalter 13 fließen kann, in die erste Spule L1 des Resonanzkreises L1, C1, der zum Schwingen auf seiner Resonanzfrequenz angeregt wird. Nach einem erneuten Einschalten des zweiten Halbleiterschalters 13 fließt durch den zweiten Halbleiterschalter 13 sowohl der durch die zweite Spule L2 fließende ansteigende Strom als auch der Schwingkreisstrom des Resonanzkreises L1, C1.

Grundsätzlich ist es möglich, den zweiten Halbleiterschalter 13 nach der Zündtaktperiodendauer T_{R} unabhängig von Einflußgrößen erneut einzuschalten. Vorzugsweise wird das Einschalten erst vorgenommen, wenn der Stromnulldurchgangsdetektor 32 festgestellt hat, daß der im Resonanzkreis L1, C1 fließende Strom, der mit dem Stromsensor 33 erfaßt wird, zu Null geworden ist. Mit dieser Maßnahme wird sichergestellt, daß zum einen die Zündtaktperiodendauer T_{R} der Resonanzfrequenz des Resonanzkreises L1, C1 entspricht und zum anderen die Schaltverluste im zweiten Halbleiterschalter 13 minimiert werden.

Eine andere Möglichkeit, den Zündtaktgenerator 20 auf die Resonanzfrequenz des Resonanzkreises L1, C1 abzustimmen, bietet der Frequenzmodulator 20a, der beispielsweise dafür sorgt, daß die Zündtaktperiodendauer des zweiten Teilansteuersignals 40 entweder in diskreten Stufen oder kontinuierlich geändert wird, so daß die Resonanzfrequenz erreicht wird. Eine vorteilhafte Weiterbildung sieht vor, daß der Frequenzmodulator 20a in Abhängigkeit vom Spannungssignal 18 gesteuert wird. Anhand der Überprüfung, ob die Spannung U an der Gasentladungslampe 10 zunimmt oder abnimmt, kann der Frequenzmodulator 20a die Frequenz erhöhen oder absenken und somit die Resonanzfrequenz erreichen.

Sofern die Zündung der Gasentladungslampe 10 nach dem Ablauf von einigen Zündtaktperiodendauern T_{R} immer noch nicht erfolgt ist, kann gemäß einer vorteilhaften Weiterbildung die Vorgabe einer Signalpause im zweiten Teilansteuersignal 40 vorgesehen sein. Die Signalpause, während der der zweite Halbleiterschalter 13 abgeschaltet ist, verhindert eine Überlastung der Bauelemente L1, C1 des Resonanzkreises und der Halbleiterschalter 12, 13. Insbesondere wird eine übermäßige thermische Belastung des ersten Kondensators C1 vermieden. Vorgesehen ist der Zündpakettaktgenerator 27, der während einer Zündpaketdauer T_{P1} das periodische Schalten des zweiten Halbleiterschalters 13 mit der Zündtaktperiodendauer T_{R} zuläßt und danach für eine vorgegebene Zündpaketpause T_{P2} sperrt.

Eine Weiterbildung sieht den Einsatz des Zählers 24 vor, der die über das Ausgangssignal 28 des Zündpakettaktgenerators 27 veranlaßte Ausgabe von Zündimpulspaketen zählt. Bei jedem Erhöhen des Zählerstands kann die Zündtaktperiodendauer T_{R} mittels des Frequenzmodulators 20a geändert werden. Gegebenenfalls ist eine Unterstützung durch das Spannungssignal 18 möglich, das neben dem Zählersignal auf den Frequenzmodulator 20a einwirkt, wobei zumindest festgelegt werden kann, ob die Frequenz bei einem Erhöhen des Zählerstands erhöht oder abgesenkt werden soll.

Nach dem Zünden der Gasentladungslampe 10, das der Zünddetektor 19 feststellt, schaltet der Umschalter 22 den Zündtaktgenerator 20 über das Schaltsignal 26 ab und öffnet den Schalter 25. Gleichzeitig wird der Betriebstaktgenerator 23 aktiviert, der das zweite Teilansteuersignal 36 für den ersten Halbleiterschalter 12 sowie das erste Teilansteuersignal 39 für den zweiten Halbleiterschalter 13 bereitstellt. Der Betriebstaktgenerator 23 erzeugt Signale nach dem in Figur 2 eingetragenen Zeitpunkt T_{Z}, der dem Zündzeitpunkt T_{Z} der Gasentladungslampe 10 entspricht. Im gezeigten Ausführungsbeispiel gemäß Figur 2 ist angenommen, daß nach dem Zündzeitpunkt T_{Z} zunächst der erste Halbleiterschalter 12 eingeschaltet bleiben soll, während der zweite Halbleiterschalter 13 abgeschaltet wird. Nach dem Zündzeitpunkt T_{Z} werden die beiden Halbleiterschalter 12, 13 im Gegentaktbetrieb mit einer vorgegebenen Betriebstaktperiode T_{B} abwechselnd ein- und abgeschaltet. Gegenüber der Resonanzfrequenz des Resonanzkreises L1, C1 wird die Betriebsfrequenz niedriger gewählt. Mit dieser Maßnahme treten die induktiven Eigenschaften der zweiten Spule L2 sowie der ersten Spule L1 in den Hintergrund, so daß ein Betreiben der Gasentladungslampe 10 mit einem rechteckförmigen Stromverlauf möglich ist. Nach dem Zünden hat der erste Kondensator C1 keine Bedeutung mehr.

Die Spannung, die der DC/DC-Wandler 14 bereitstellt, wird mit der vorgegebenen Betriebstaktperiode T_{B} der Gasentladungslampe 10 zur Verfügung gestellt. Der zweite Kondensator C2, der die Gasentladungslampe 10 mit einem Schaltungsbezugspunkt, im gezeigten Ausführungsbeispiel mit Masse 11 verbindet, sorgt für eine Unterdrückung von Gleichstromanteilen, die in der Gasentladungslampe 10 zumindest bei einer unipolaren Spannungsversorgung auftreten könnten.

Eine Leistungssteuerung der der Gasentladungslampe 10 zugeführten elektrischen Leistung ist beispielsweise mit einer Frequenzänderung des Betriebstaktgenerators 23 möglich, wobei die Leistungsvorgabe 30 vorzugsweise die Leistung durch Vorgabe des durch die Gasentladungslampe 10 fließenden Stroms bei ermittelter Lampenspannung U festlegt. Als Eingangssignale 31a ... 31b der Leistungsvorgabe 30 sind deshalb zweckmäßigerweise der Leistungssollwert, das Spannungssignal 18 sowie ein von einem nicht näher gezeigten Stromsensor erfaßtes Stromsignal vorgesehen, das den durch die Gasentladungslampe 10 fließenden Strom wiedergibt. Vorzugsweise wird die Leistung der Gasentladungslampe 10 über eine Variation der Ausgangsspannung des DC/DC-Wandlers festgelegt. Das Steuersignal 29, das die Leistungsvorgabe 30 bereitstellt, wird deshalb dem DC/DC-Wandler 14 zur Durchführung der Variation der Ausgangsspannung zur Verfügung gestellt.

Eine andere vorteilhafte Ausgestaltung betrifft die beiden Spulen L1, L2, die vorzugsweise über die Kopplung M zumindest lose magnetisch gekoppelt werden. Eine solche magnetisch lose Kopplung ist beispielsweise dadurch erreichbar, daß die beiden Spulen L1, L2 als gekoppelte Luftspulen ausgebildet sind. Mit dieser Maßnahme ergibt sich eine Spannungserhöhung im Resonanzkreis C1, L1, die mit einfachen Mitteln eine zusätzliche Spannungserhöhung erbringt. Ein weiterer Vorteil ergibt sich durch eine Reduzierung der Abmessungen der gekoppelten Spulen L1, L2 gegenüber einer Anordnung, bei der die beiden Spulen L1, L2 getrennt ausgeführt sind.

Die Resonanzfrequenz des Resonanzkreises L1, C1 liegt vorzugsweise im Bereich von 100 kHz bis 10 MHz, während die der Betriebsaktperiode T_{B} entsprechende Betriebsfrequenz im Dauerbetrieb der Gasentladungslampe 10 in einem Bereich von vorzugsweise 100 Hz bis 20 kHz liegt. Der Kapazitätswert des ersten Kondensator C1 liegt vorzugsweise in einem Bereich von 0,5 pF bis 200 pF. Am ersten Kondensator C1 tritt die Zündspannung der Gasentladungslampe 10 auf, so daß der erste Kondensator C1 entsprechend dimensioniert sein muß. Vorzugsweise ist der erste Kondensator C1 bereits durch die Elektrodenkapazität der Gasentladungslampe 10 festgelegt, so daß ein separates Bauteil als erster Kondensator C1 entfallen kann. Eine Realisierungsmöglichkeit als separates Bauteil ist durch ein hochspannungsfestes Koaxialkabel gegeben, das eine vorgegebene Länge -zum Erreichen der Kapazität aufweist. Unter Zugrundelegung des Kapazitätsbereichs von beispielsweise 0,5 pF bis 200 pF weist die Induktivität der ersten Spule L1 eine Induktivität im Bereich von beispielsweise 2 µH bis 20 mH auf, um einen Wert innerhalb des zuvor angegebenen Resonanzfrequenzbereichs zu erreichen. Der Induktivitätswert der zweiten Spule L2 wird vorzugsweise auf einen Wert von 500 nH bis 500 µH festgelegt. Die Zündpaketdauer T_{B1} liegt beispielsweise bei 100 µs, gefolgt von der Zündpaketpause T_{P2} von beispielsweise 1 bis 10 ms.

Der DC/DC-Wandler 14, der vorzugsweise vorhanden ist, erhöht die von der Batterie 16 bereitgestellte Spannung auf das zum Betreiben der Gasentladungslampe 10 im Dauerbetrieb erforderliche Spannungsniveau von beispielsweise 50 V bis 250 V. Der DC/DC-Wandler 14 ist insbesondere vorgesehen, wenn die Gasentladungslampe 10 als Scheinwerferlampe in einem Kraftfahrzeug eingesetzt ist, wobei vorzugsweise eine Leistungsregelung über eine Variation der Ausgangsspannung des DC/DC-Wandlers 14 vorgesehen ist.

## Patentansprüche

1. Vorrichtung zum Betreiben einer Gasentladungslampe (10), mit einem die Gasentladungslampe (10) enthaltenden Resonanzkreis (L1, C1), mit einer an einer Spannungsquelle (14) angeschlossenen Reihenschaltung, die einen ersten Halbleiterschalter (12) sowie einen zweiten Halbleiterschalter (13) enthält, dadurch gekennzeichnet, daß die Reihenschaltung weiterhin ein induktives Element (L2) enthält und daß der Resonanzkreis (L1, C1) an einem Verbindungspunkt (15) zwischen dem induktiven Element (L2) und dem zweiten Halbleiterschalter (13) angeschlossen ist.

2. Vorrichtung nach Anspruch 1, dadurch gekennzeichnet, daß der Resonanzkreis (L1, C1) als Reihenschaltung von einem induktiven Element (L1) und einem parallel zur Gasentladungslampe (10) geschalteten ersten Kondensator (C1) gebildet ist.

3. Vorrichtung nach Anspruch 1, dadurch gekennzeichnet, daß die Gasentladungslampe (10) über einen zweiten Kondensator (C2) mit einem ein Bezugspotential führenden Schaltungsteil (11) verbunden ist.

4. Vorrichtung nach Anspruch 1, dadurch gekennzeichnet, daß ein Zünddetektor (19) vorgesehen ist, der das Zünden der Gasentladungslampe (10) feststellt.

5. Vorrichtung nach Anspruch 4, dadurch gekennzeichnet, daß der Zünddetektor (19) die an der Gasentladungslampe (10) auftretende Spannung (U) auswertet.

6. Vorrichtung nach Anspruch 4, dadurch gekennzeichnet, daß ein vom Zünddetektor (4) beeinflußter Zündtaktgenerator (20) vorgesehen ist, der den zweiten Halbleiterschalter (13) mit einem Teilansteuersignal (40) beaufschlagt, dessen Periodendauer (T_{R}) zumindest näherungsweise der Resonanzfrequenz des Resonanzkreises (L1, C1) entspricht.

7. Vorrichtung nach Anspruch 6, dadurch gekennzeichnet, daß die innerhalb der Periodendauer (T_{R}) liegende Einschaltzeitdauer des zweiten Halbleiterschalters (13) länger ist als die Abschaltzeitdauer.

8. Vorrichtung nach Anspruch 6, dadurch gekennzeichnet, daß ein Frequenzmodulator (20a) vorgesehen ist, der die Periodendauer des Teilansteuersignals (40) beeinflußt.

9. Vorrichtung nach Anspruch 8, dadurch gekennzeichnet, daß der Frequenzmodulator (20a) die Periodendauer (T_{R}) in Abhängigkeit von der an der Gasentladungslampe (10) auftretenden Spannung (U) beeinflußt.

10. Vorrichtung nach Anspruch 6, dadurch gekennzeichnet, daß ein Zündpakettaktgenerator (27) vorgesehen ist, der die Ausgabe des Teilansteuersignals (40) derart steuert, daß eine Zündpaketdauer (T_{P1}) vorgesehen ist, während der der zweite Halbleiterschalter (13) abwechselnd ein- und abgeschaltet wird und daß darauf eine Zündpaketpause (T_{P2}) folgt.

11. Vorrichtung nach Anspruch 10, dadurch gekennzeichnet, daß die Anzahl der Zündimpulspakete von einem Zähler (24) erfaßt ist, der die Periodendauer (T_{R}) beeinflußt.

12. Vorrichtung nach Anspruch 4, dadurch gekennzeichnet, daß ein Stromsensor (33) zum Erfassen des im Resonanzkreis (L1, C1) fließenden Stroms vorgesehen ist und daß der Zündtaktgenerator (20) in Abhängigkeit vom erfaßten Stromsignal (34) beeinflußt ist.

13. Vorrichtung nach Anspruch 12, dadurch gekennzeichnet, daß ein Einschalten des zweiten Halbleiterschalters (13) nach einem detektierten Stromnulldurchgang vorgesehen ist.

14. Vorrichtung nach Anspruch 4, dadurch gekennzeichnet, daß ein vom Zünddetektor (19) beeinflußter Betriebstaktgenerator (23) vorgesehen ist, der nach einem Zünden der Gasentladungslampe (10) ein abwechselndes Schalten der beiden Halbleiterschalter (12, 13) im Gegentakt veranlaßt.

15. Vorrichtung nach Anspruch 14, dadurch gekennzeichnet, daß die Betriebstaktperiodendauer (T_{B}), die der Betriebstaktgenerator (23) vorgibt, länger ist als die Periodendauer des Resonanzkreises (L1, C1).

16. Vorrichtung nach Anspruch 1, dadurch gekennzeichnet, daß die Spannungsquelle (14) ein von einer Batterie (16) gespeister DC/DC-Wandler ist.

17. Vorrichtung nach Anspruch 16, dadurch gekennzeichnet, daß der DC/DC-Wandler (14) eine in Abhängigkeit von einem Steuersignal (29), das von einer Leistungsvorgabe (30) bereitgestellt ist, abhängige Ausgangsspannung bereitstellt.

18. Vorrichtung nach Anspruch 1, dadurch gekennzeichnet, daß das induktive Element (L2) sowie das im Resonanzkreis (L1, C1) enthaltene induktive Element (L1) magnetisch gekoppelt sind.

19. Vorrichtung nach Anspruch 18, dadurch gekennzeichnet, daß die beiden induktiven Elemente (L1, L2) magnetisch lose gekoppelt sind.

20. Verfahren zum Betreiben einer Gasentladungslampe (10), die in einem Resonanzkreis (L1, C1) enthalten ist, wobei eine an einer Spannungsquelle (14) angeschlossene Reihenschaltung vorgesehen ist, die einen ersten Halbleiterschalter (12) sowie einen zweiten Halbleiterschalter (13) enthält, dadurch gekennzeichnet, daß die Reihenschaltung weiterhin ein induktives Element (L2) enthält, wobei der Resonanzkreis (L1, C1) an einem Verbindungspunkt (15) zwischen dem induktiven Element (L2) und dem zweiten Halbleiterschalter (13) angeschlossen ist, daß ein Zünddetektor (19) vorgesehen ist, der eine Unterscheidung zwischen dem gezündeten und dem nicht gezündeten Zustand der Gasentladungslampe (10) ermöglicht, daß während des nicht gezündeten Zustands der Gasentladungslampe (10) der erste Halbleiterschalter (12) eingeschaltet und daß der zweite Halbleiterschalter (13) zumindest zeitweise (T_{P1}) zum Anregen des Resonanzkreises (L1, C1) geschaltet wird und daß nach dem Zünden der Gasentladungslampe (10) die beiden Halbleiterschalter (12, 13) im Gegentakt abwechselnd mit einer vorgegebenen Betriebstaktperiodendauer (T_{B}) geschaltet werden zum Betreiben der Gasentladungslampe (10) im Dauerbetrieb.

## Claims

1. Apparatus for operating a gas discharge lamp (10), having a resonant circuit (L1, C1) containing the gas discharge lamp (10), having a series circuit which is connected to a voltage source (14) and contains a first semiconductor switch (12) as well as a second semiconductor switch (13), characterized in that the series circuit furthermore contains an inductive element (L2), and in that the resonant circuit (L1, C1) is connected to a junction point (15) between the inductive element (L2) and the second semiconductor switch (13).

2. Apparatus according to Claim 1, characterized in that the resonant circuit (L1, C1) is formed as a series circuit of an inductive element (L1) and a first capacitor (C1), which is connected in parallel with the gas discharge lamp (10).

3. Apparatus according to Claim 1, characterized in that the gas discharge lamp (10) is connected via a second capacitor (C2) to a circuit section (11) carrying reference-earth potential.

4. Apparatus according to Claim 1, characterized in that an ignition detector (19) is provided which ascertains the ignition of the gas discharge lamp (10).

5. Apparatus according to Claim 4, characterized in that the ignition detector (19) evaluates the voltage (U) occurring at the gas discharge lamp (10).

6. Apparatus according to Claim 4, characterized in that an ignition clock generator (20) is provided, which is influenced by the ignition detector (4) and applies a partial driving signal (40) to the second semiconductor switch (13), the period (T_{R}) of which signal corresponds at least approximately to the resonant frequency of the resonant circuit (L1, C1).

7. Apparatus according to Claim 6, characterized in that the on-period which appertains to the second semiconductor switch (13) and is encompassed within the period (T_{R}) is longer than the off-period.

8. Apparatus according to Claim 6, characterized in that provision is made of a frequency modulator (20a), which influences the period of the partial driving signal (40).

9. Apparatus according to Claim 8, characterized in that the frequency modulator (20a) influences the period (T_{R}) as a function of the voltage (U) which occurs at the gas discharge lamp (10).

10. Apparatus according to Claim 6, characterized in that provision is made of an ignition burst clock generator (27), which controls the outputting of the partial driving signal (40) in such a way that an ignition burst duration (T_{P1}) is provided, during which the second semiconductor switch (13) is switched on and off alternately, and that this is followed by an ignition burst intermission (T_{P2}).

11. Apparatus according to Claim 10, characterized in that the number of ignition pulse bursts is acquired by a counter (24), which influences the period (T_{R}).

12. Apparatus according to Claim 4, characterized in that a current sensor (33) for detecting the current flowing in the resonant circuit (L1, C1) is provided, and in that the ignition clock generator (20) is influenced in dependence on the detected current signal (34).

13. Apparatus according to Claim 12, characterized in that provision is made for switching the second semiconductor switch (13) on after a current zero crossing has been detected.

14. Apparatus according to Claim 4, characterized in that an operating clock generator (23) is provided, which is influenced by the ignition detector (19) and, after ignition of the gas discharge lamp (10), brings about alternate switching of the two semiconductor switches (12, 13) in a push-pull manner.

15. Apparatus according to Claim 14, characterized in that the operating clock period (TB) predetermined by the operating clock generator (23) is longer than the period of the resonant circuit (L1, C1).

16. Apparatus according to Claim 1, characterized in that the voltage source (14) is a DC/DC converter fed by a battery (16).

17. Apparatus according to Claim 16, characterized in that the DC/DC converter (14) provides an output voltage which is dependent on a control signal (29), which is provided by a power specification (30).

18. Apparatus according to Claim 1, characterized in that the inductive element (L2) and the inductive element (L1), which is contained in the resonant circuit (L1, C1), are magnetically coupled.

19. Apparatus according to Claim 18, characterized in that the two inductive elements (L1, L2) are loosely magnetically coupled.

20. Method for operating a gas discharge lamp (10) contained in a resonant circuit (L1, C1), provision being made of a series circuit which is connected to a voltage source (14) and contains a first semiconductor switch (12) as well as a second semiconductor switch (13), characterized in that the series circuit furthermore contains an inductive element (L2), the resonant circuit (L1, C1) being connected to a junction point (15) between the inductive element (L2) and the second semiconductor switch (13), in that provision is made of an ignition detector (19), which enables a distinction to be made between the ignited and non-ignited state of the gas discharge lamp (10), in that the first semiconductor switch (12) is switched on during the non-ignited state of the gas discharge lamp (10), and in that the second semiconductor switch (13) is switched at least on occasion (T_{P1}) in order to excite the resonant circuit (L1, C1), and in that after the ignition of the gas discharge lamp (10), the two semiconductor switches (12, 13) are switched alternately in a push-pull manner with a predetermined operating clock period (T_{B}), for the purpose of operating the gas discharge lamp (10) in continuous operation.

## Revendications

1. Dispositif destiné à faire fonctionner une lampe à décharge (10), comprenant un circuit à résonance (L1, C1) contenant la lampe à décharge (10), un circuit monté en série qui est raccordé à une source de tension (14), circuit qui contient un premier interrupteur à semi-conducteurs (12), ainsi qu'un deuxième interrupteur à semi-conducteurs (13),
caractérisé en ce que
- le circuit monté en série contient en outre un élément à réactance (L2) et
- le circuit à résonance (L1, Cl) est raccordé à un point de combinaison (15), situé entre l'élément à réactance (L2) et le deuxième interrupteur à semi-conducteurs (13).

2. Dispositif selon la revendication 1,
caractérisé en ce que
le circuit à résonance (L1, C1) est formé en tant que montage en série par un élément à réactance (L1) et un premier condensateur (Cl)monté en parallèle par rapport à la lampe à décharge (10).

3. Dispositif selon la revendication 1,
caractérisé en ce que
la lampe à décharge (10) est reliée par l'intermédiaire d'un deuxième condensateur (C2) à un élément de circuit (11) qui fait passer un potentiel de référence.

4. Dispositif selon la revendication 1,
caractérisé en ce qu'
on prévoit un détecteur d'allumage (19), qui détermine l'allumage de la lampe à décharge (10).

5. Dispositif selon la revendication 4,
caractérisé en ce que
le détecteur d'allumage (19) exploite la tension (U) qui se produit sur la lampe à décharge (10).

6. Dispositif selon la revendication 4,
caractérisé en ce qu'
il est prévu un générateur de cycles d'allumage (20), qui est influencé par le détecteur d'allumage (4), générateur (20) qui active le deuxième interrupteur à semi-conducteurs (13) par un signal partiel de commande (40), dont la durée de période (T_{R}) correspond au moins de façon approximative à la fréquence de résonance du circuit à résonance (L1, C1).

7. Dispositif selon la revendication 6,
caractérisé en ce que
la durée du temps de branchement du deuxième interrupteur à semi-conducteurs (13) qui est comprise à l'intérieur de la durée de période (T_{R}) est plus longue que la durée de débranchement.

8. Dispositif selon la revendication 6,
caractérisé en ce qu'
on prévoit un modulateur de fréquence (20a), qui influence la durée de la période du signal partiel de commande (40).

9. Dispositif selon la revendication 8,
caractérisé en ce que
le modulateur de fréquence (20a) influence la durée de la période (T_{R}) en fonction de la tension (U) qui se produit sur la lampe à décharge (10).

10. Dispositif selon la revendication 6,
caractérisé en ce qu'
- on prévoit un générateur de cycles de paquets d'impulsions d'allumage (27), qui commande la délivrance du signal partiel de commande (40) d'une manière telle que l'on prévoit une durée de paquet d'allumage (T_{P1}), pendant laquelle est branché et débranché de façon alternée le deuxième interrupteur à semi-conducteurs (13) et
- une pause du paquet d'allumage (T_{P2}) y fait suite.

11. Dispositif selon la revendication 10,
caractérisé en ce que
le nombre des paquets d'impulsions d'allumage est détecté par un compteur (24), qui influence la durée de la période (T_{R}).

12. Dispositif selon la revendication 4,
caractérisé en ce qu'
- on prévoit un détecteur de courant (33), qui sert à détecter le courant qui passe dans le circuit à résonance (L1, C1) et
- le générateur de cycles d'allumage (20) est influencé en fonction du signal de courant détecté(34).

13. Dispositif selon la revendication 12,
caractérisé en ce qu'
on prévoit un branchement du deuxième interrupteur à semi-conducteurs (13) après une détection du passage du courant par zéro.

14. Dispositif selon la revendication 4,
caractérisé en ce qu'
on prévoit un générateur de cycles de fonctionnement (23), influencé par le détecteur d'allumage (19), générateur qui provoque un branchement alterné des deux interrupteurs à semi-conducteurs (12, 13) après un allumage de la lampe à décharge (10) de façon symétrique (push-pull).

15. Dispositif selon la revendication 14,
caractérisé en ce que
la durée de la période de cycles de fonctionnement (TB), que prédéfinit le générateur de cycles de fonctionnement (23), est plus longue que la durée de la période du circuit à résonance (L1, C1).

16. Dispositif selon la revendication 1,
caractérisé en ce que
la source de tension (14) est un convertisseur à courant continu/continu alimenté par une batterie (16).

17. Dispositif selon la revendication 16,
caractérisé en ce que
le convertisseur à courant continu/continu (14) fournit une tension de sortie qui est fonction d'un signal de commande (29), qui est fourni par une prédéfinition de la puissance (30).

18. Dispositif selon la revendication 1,
caractérisé en ce que
l'élément à réactance (L2) ainsi que le cycle à réactance (L1), qui est contenu dans le circuit à résonance (L1, C1), sont accouplés magnétiquement

19. Dispositif selon la revendication 18,
caractérisé en ce que
les deux éléments à réactance (L1, L2) sont magnétiquement lâches.

20. Procédé destiné à faire fonctionner une lampe à décharge (10), qui est contenue dans un circuit à résonance (L1, C1), dans lequel on prévoit un montage en série , qui est raccordé à une source de tension (14), montage qui comprend un premier interrupteur à semi-conducteurs (12) ainsi qu'un deuxième interrupteur à semi-conducteurs (13),
caractérisé en ce que
- le montage en série comprend en outre un élément à réactance (L2), le circuit à résonance (L1, C1) étant raccordé à un point de jonction (15), qui est situé entre l'élément à réactance (L2) et le deuxième interrupteur à semi-conducteurs (13),
- on prévoit un détecteur d'allumage (19) qui permet de faire une distinction entre l'état allumé et l'état non allumé de la lampe à décharge (10),
- pendant l'état non allumé de la lampe à décharge (10) le premier interrupteur à semi-conducteurs (12) est branché et
- le deuxième interrupteur à semi-conducteurs (13) est branché au moins temporairement (T_{P1}) pour exciter le circuit à résonance (L1, C1) et
- après l'allumage de la lampe à décharge (10) les deux interrupteur à semi-conducteurs (12, 13) sont branchés de façon alternée de manière symétrique (push-pull) avec une durée de période de cycles de fonctionnement prédéfinie (T_{B}) pour faire fonctionner la lampe à décharge (10) en régime permanent.
